# EUROPEAN PATENT SPECIFICATION

(11) **EP 1 744 840 B1**
(45) Date of publication and mention of the grant of the patent: **14.05.2008**
(21) Application number: 05702387.1
(22) Date of filing: 01.02.2005
(51) Int. Cl.: B08B 9/32

(54) **DEVICE TO OVERTURN MOVING BOTTLES**
VORRICHTUNG ZUM UMDREHEN VON SICH BEWEGENDEN FLASCHEN
PROCEDE DE RENVERSEMENT DE BOUTEILLES MOBILES

(30) Priority: 10.02.2004 IT BO20040060
(43) Date of publication of application: 24.01.2007
(60) Divisional application: 07020814.5
(73) Proprietor: SACMI FILLING S.p.A., 43100 Parma (IT)
(72) Inventor: STOCCHI, Gabriele, 43100 Parma (IT)
(74) Representative: Beszédes, Stephan G.
(86) International application number: PCT/IB2005/000237
(87) International publication number: WO 2005/080013

(56) References cited:
- DE-U1- 9 411 971
- FR-A- 2 650 816
- US-A- 3 226 757
- US-A- 5 222 716
- PATENT ABSTRACTS OF JAPAN vol. 2003, no. 12, 5 December 2003 (2003-12-05) -& JP 2003 237937 A (MITSUBISHI HEAVY IND LTD), 27 August 2003 (2003-08-27)
- PATENT ABSTRACTS OF JAPAN vol. 2002, no. 04, 4 August 2002 (2002-08-04) -& JP 2001 340821 A (TOYO GLASS KIKAI KK; TOYO SEIKAN KAISHA LTD), 11 December 2001 (2001-12-11)

## Description

### Field of the art

The present invention concerns the technological field of bottling plants, particularly devices to overturn moving bottles.

### State of the art

Several kinds of continuous rotary machines to perform overturned bottles washing are known. In said machines, the overturning of the bottles from the vertical position facing upwards to the vertical position facing downwards is obtained during the rotation of a carousel provided, eternally, with a plurality of forks that slide along a fixed ring-guide specifically shaped. The shaping of such metal ring is usually hand made and is expensive and often imprecise. Also, the continuous sliding causes the wear of the sliding forks and of the fixed guide (twist), resulting in the altering of the operational conditions of the plant. Some kinds of plants are provided with a lubrication system, which has however proved insufficient.

DE 94 11 971 U1 discloses a device for overturning moving bottles wherein the overturning of the bottles from a vertical upwards facing position into a vertical downwards facing position is obtained during a continuous rotation of a carousel, to which a swinging arm is articulated via a pivot, the carousel being rotatable around an axis of rotation in a horizontal plane, the arm being connected to a mechanism which increases a vertical angular excursion of the arm, the mechanism comprising a lobed wheel and a rack engaging therewith.

The target is then to avoid all the problems caused by the wear of the forks and of the shaped guide (twist). The present invention solves all the aforementioned problems by eliminating the wear due to sliding.

The subject-matter of the present invention differs from the device of DE 94 11 971 U1 in that the lobed wheel is a three-lobed wheel, and the rack is a sector engaging therewith. These features solve the problem of further facilitating the rotation of the bottles.

The subject-matter of the invention is defined in claim 1.

### Description

The invention is now disclosed with reference to the figures attached to be considered as an unrestrictive example.

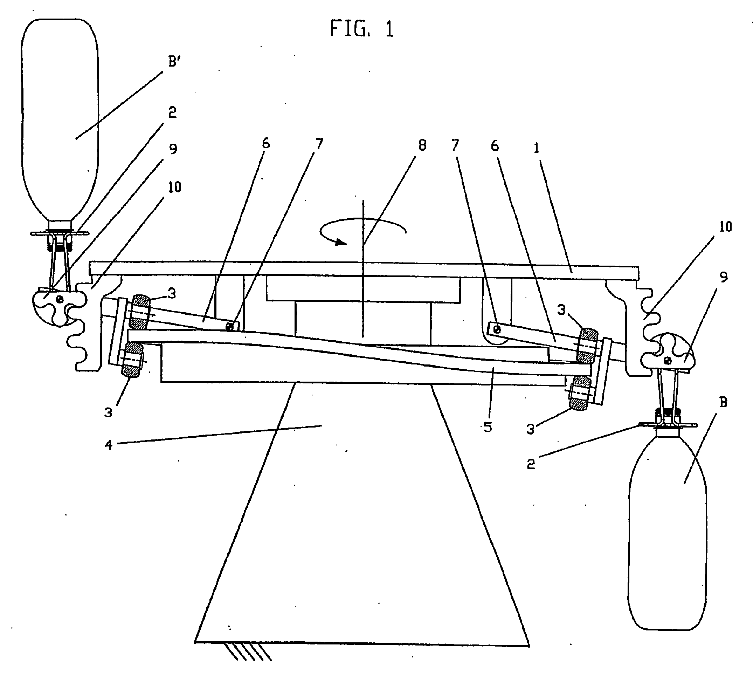

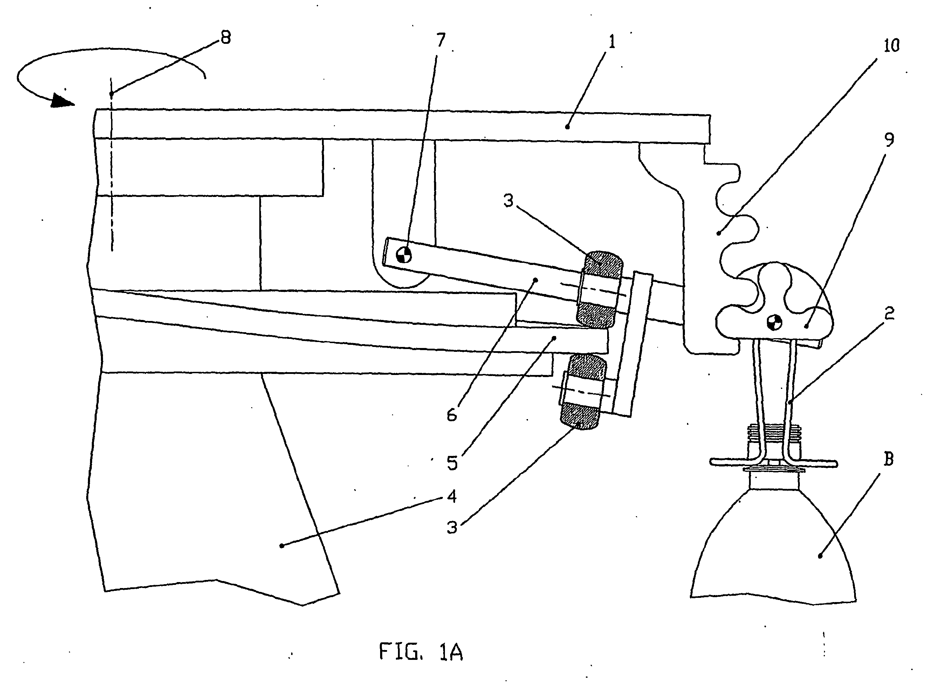

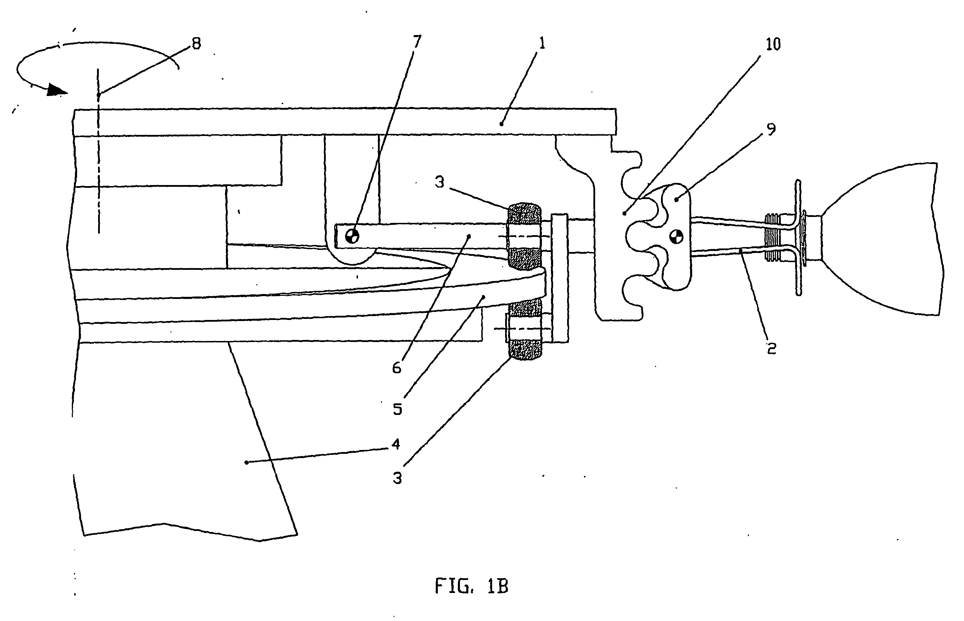

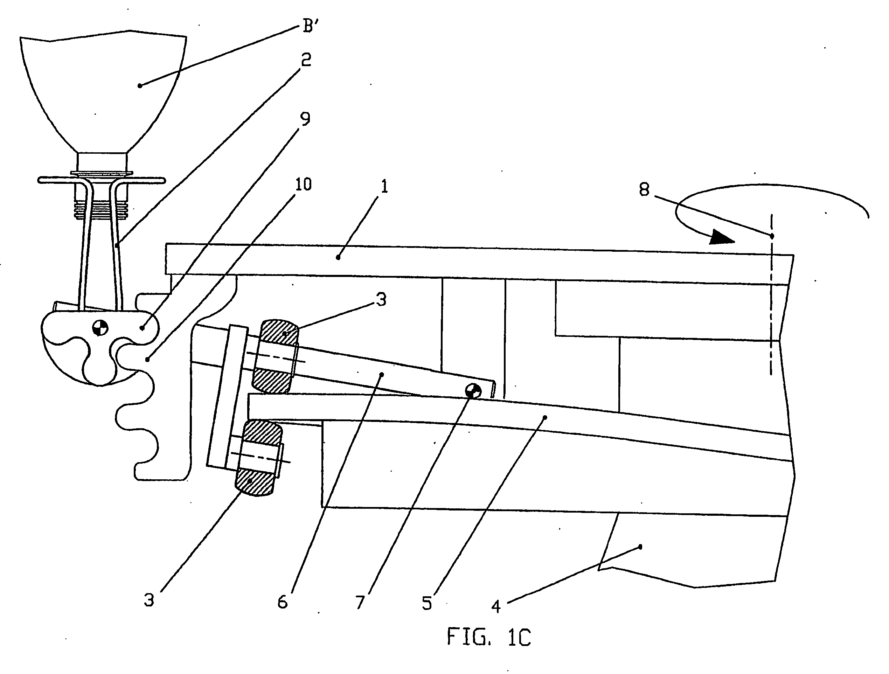

Figure 1 represents the schematic view of a rotating carousel (1) provided, externally with a set of gripping devices (2) showing an entering bottle (B) in vertical position facing upwards and an exiting bottle (B') turned upside down with its neck facing downwards. Please note the presence of a fixed track (5) specifically shaped with its lower part located by the entrance zone of the upright bottle, and the higher part located by the exit zone of the overturned bottle. The moving parts consisting of a lobe wheel (9) and its congruent sector (10) perform the overturning of the bottle during the rotation of the carousel (1). The rolls (3) during the carousel rotation (1) roll without sliding on the fixed track (5), thus causing the angular swings of the arm (6) articulated to the pivot (7) on the rotating carousel (1). Said arm angular swings (6), increased by the conjugated mechanism (9, 10), perform the complete overturning of the bottle from position (B) to position (B').

Figure 1a shows in detail the entrance of the bottle (B) taken by the gripping equipment (2) that holds it in vertical attitude face upwards.

Figure 1b shows in detail an intermediate phase during which the gripping equipment (2) holds the bottle in horizontal attitude.

Figure 1c shows in detail the exit phase of the bottle held in overturned position by the gripping equipment (2).

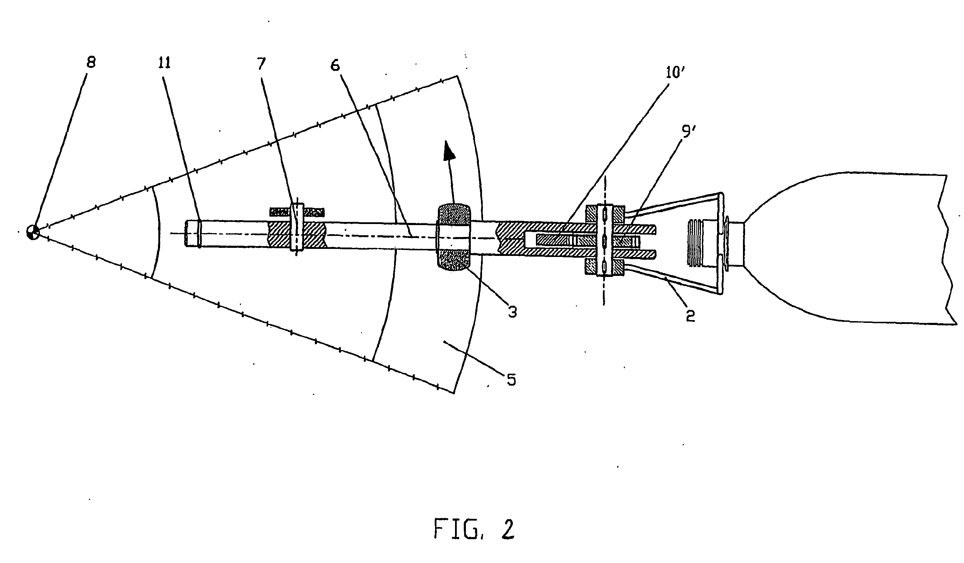

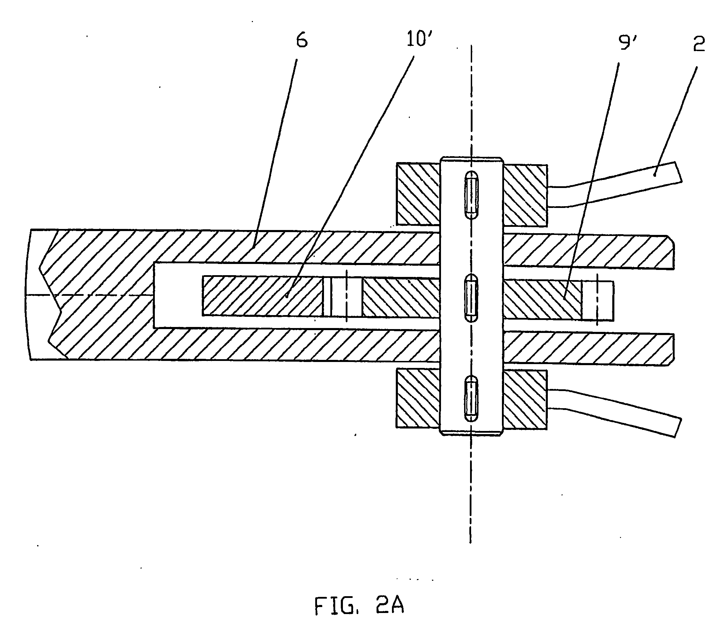

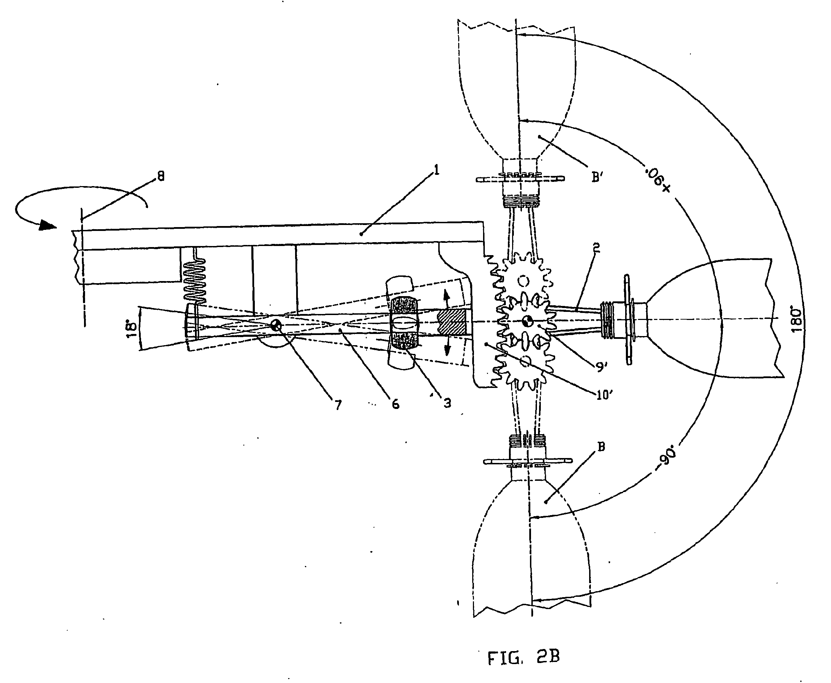

Figure 2 is a plan view of the gripping equipment (2) that holds the moving bottle in horizontal position. The partial section of the swinging edge (6) shows the engagement of the conjugated mechanisms (9', 10') and the application of the gripping equipment (2) that holds the moving bottle.

Figure 2a is a further enlargement of the partial section of the arm edge (6) which highlights when the angular swinging of the arm (6), increased by the mechanisms (9', 10'), performs the overturning of the gripping equipment (2) taking the moving bottle.

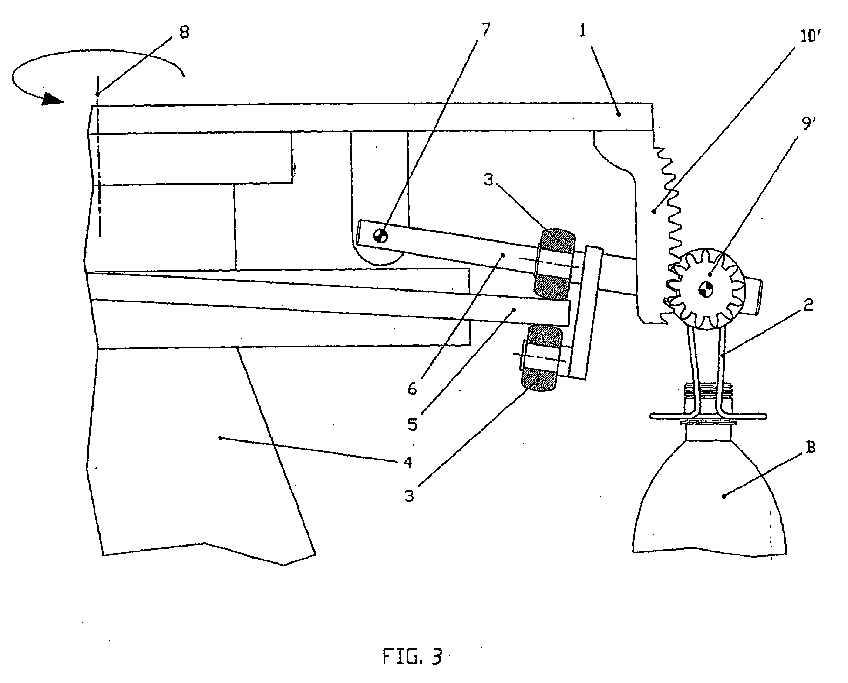

Figure 2b is a synoptic schematization of the complete overturning of the bottle (180 degrees rotation) obtained by increasing tenfold the reduced swinging of the arm (6) around the fulcrum (7). It is implied that the rotation of the bottle is to be of 180 degrees, but the angular excursion of the arm (6) can be reduced. In figure 3b the reduction ratio is ten, but a satisfactory functioning can be achieved even with different ratio values from those indicated in the drawing.

Figure 3 indicates a variation of the example shown in figures 1, 1a, 1b,1c. Please note that the mechanism (9 and 10) has been replaced by the mechanism (9' and 10').

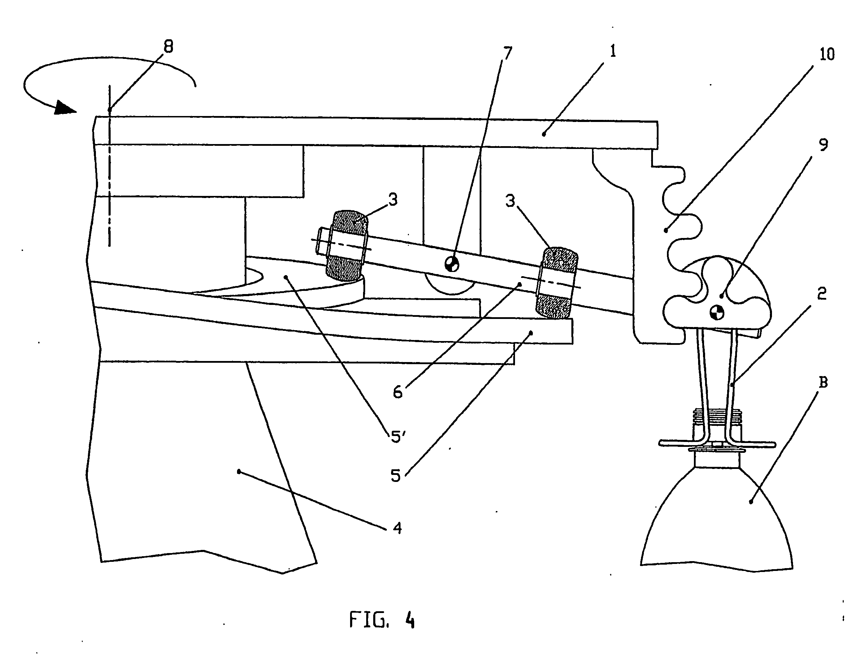

Figure 4 shows a variation similar to figure 1a with two fixed tracks (5, 5').

In the figures each single detail is marked as follows:
1 : rotating carousel;
2 : a gripping mechanism;
3 : a roll that rolls without sliding on a fixed track specifically shaped;
4 : the fixed base of the rotating carousel;
5 : specifically shaped fixed track;
5' : a second fixed track;
6 : a swinging arm;
7 : the swinging fulcrum of the arm (6).
8 : the carousel rotation axis.
9 : a three-lobed wheel.
9' : a toothed pinion.
10 : a sector engaging with the three-lobed wheel (9).
10' : a sector engaging with the pinion (9').

The figures point out that the overturning of the moving bottles is obtained through the rolls (3) that roll without sliding along the specifically shaped track, with the lower part facing the bottle entrance zone (B) and the upper part facing the exit zone of the fully overturned bottle (B'). Said rolls (3) both engaged to run along the fixed track (5), perform the swinging of the arm (6) around the pivot (7) on the rotating carousel (1). At the end of said swinging arm (7) there is a lobed wheel (9) engaging with a rack (10) connected to the carousel (1).

The rotations of said mechanisms (9, 9') cause the overturning of the gripping organs (2) that take each incoming bottle, turn it during the path of the inclined track and overturn it completely before setting it free at the exit.h

The figures of the attached drawings represent graphically only an example of the possible forms of practical realization of the different parts composing the devices object of the present invention. It is in fact evident that the structural dimensioning and proportioning of the different components will be defined according to the productivity goals set for each kind of plant, for the handling of bottles or other containers, or objects to be overturned during the continuous transit.

The lobed wheel (9) and the rack (10) can be manufactured with different mechanisms such as sectors of helical or globoid wheels with worm screws, or with conic sectors engaging with conjugated pinions or also with special conjugated mechanisms with conjunct outlines. It is also evident that the technological choices concerning the building materials will be made according to different criteria of realization in compliance with the economic choices necessary to meet the variable market needs.

The inventive core of the invention is the realization of a device to overturn objects in continuous transit with the total elimination of the sliding organs used so far in the systems know. The key point of the invention lies in the simplicity of the solution and in the absolute functional reliability even at high productive rhythms. Its manufacturing is also significantly inexpensive, easy to be performed and it also requires very little maintenance.

Upon disclosure of the main original characteristics of the overturning device object of the present invention, any average technician will be able to manufacture, without inventive effort, devices based on the description and the schematic figures of the attached drawings representing an unrestrictive example.

All the devices featuring the characteristics as basically described, illustrated and hereinafter claimed will be considered as being part of the protection sphere of the present invention.

## Claims

1. A device for overturning moving bottles wherein the overturning of the bottles from a vertical upwards facing position (B) into a vertical downwards facing position (B') is obtained during a continuous rotation of a carousel (1), to which a swinging arm (6) is articulated via a pivot (7), the carousel (1) being rotatable around an axis of rotation (8) in a horizontal plane,
**characterized in that**
the arm (6) is connected to a mechanism (9, 10; 9', 10') which increases a vertical angular excursion of the arm (6), the mechanism (9, 10; 9', 10') comprising a lobed wheel (9) and a rack (10) engaging therewith, wherein the lobed wheel (9) is a three-lobed wheel (9), and the rack (10) is a sector engaging therewith.

2. The device according to claim 1, **characterized in that** the lobed wheel (9) and the rack (10) are manufactured with sectors of helical or globoid wheels with worm screws.

3. The device according to claim 1, **characterized in that** the lobed wheel (9) and the rack (10) are manufactured with conic sectors engaging with conjugated pinions.

4. The device according to one of the preceding claims, **characterized in that** the mechanism (9, 10; 9', 10') is connected to an outer radial end of the arm (6).

5. The device according to claim 4, **characterized in that** the track (5) is specifically shaped such that a lower part of the track (5) faces a bottle entrance zone and an upper part thereof faces a bottle exit zone.

6. The device according to one of the preceding claims, **characterized in that** the arm (6) is connected to spring (11), which is also connected to the carousel (1).

7. The device according to claim 4, **characterized in that** the spring (11) is connected to a radial inner end of the arm (16).

8. The device according to one of the preceding claims, **characterized in that** the mechanism (9, 10; 9', 10') is connected to a gripping equipment (2) for holding the moving bottles.

## Patentansprüche

1. Vorrichtung zum Umdrehen von sich bewegenden Flaschen, wobei das Umdrehen der Flaschen von einer vertikalen nach oben weisenden Position (B) in eine vertikale nach unten weisende Position (B') während einer kontinuierlichen Drehung eines Karussells (1) erhalten wird, an dem ein Schwingarm (6) über einen Drehzapfen (7) angelenkt ist, wobei das Karussell (1) um eine Drehachse (8) in einer horizontalen Ebene drehbar ist,
**dadurch gekennzeichnet, dass**
der Arm (6) mit einem Mechanismus (9, 10; 9', 10') verbunden ist, der eine vertikale Winkelauslenkung des Armes (6) vergrößert, wobei der Mechanismus (9, 10; 9', 10') ein mit Nocken versehenes Rad (9) und eine damit in Eingriff stehende Zahnstange (10) umfasst, wobei das mit Nocken versehene Rad (9) ein mit drei Nocken versehenes Rad (9) ist und die Zahnstange (10) ein Sektor ist, der damit in Eingriff steht.

2. Vorrichtung nach Anspruch 1,
**dadurch gekennzeichnet, dass**
das mit Nocken versehene Rad (9) und die Zahnstange (10) mit Sektoren aus spiralförmigen oder Globoidrädem mit Gewindestiften gefertigt sind.

3. Vorrichtung nach Anspruch 1,
**dadurch gekennzeichnet, dass**
das mit Nocken versehene Rad (9) und die Zahnstange (10) mit konischen Sektoren gefertigt sind, die mit konjugierten Ritzeln in Eingriff stehen.

4. Vorrichtung nach einem der vorhergehenden Ansprüche,
**dadurch gekennzeichnet, dass**
der Mechanismus (9, 10; 9', 10') mit einem äußeren radialen Ende des Armes (6) verbunden ist.

5. Vorrichtung nach Anspruch 4,
**dadurch gekennzeichnet, dass**
die Führung (5) speziell geformt ist, sodass ein unterer Teil der Führung (5) zu einer Flascheneintrittszone weist und ein oberer Teil von ihr zu einer Flaschenaustrittszone weist.

6. Vorrichtung nach einem der vorhergehenden Ansprüche,
**dadurch gekennzeichnet, dass**
der Arm (6) mit einer Feder (11) verbunden ist, die auch mit dem Karussell (1) verbunden ist.

7. Vorrichtung nach Anspruch 4,
**dadurch gekennzeichnet, dass**
die Feder (11) mit einem radialen inneren Ende des Armes (16) verbunden ist.

8. Vorrichtung nach einem der vorhergehenden Ansprüche,
**dadurch gekennzeichnet, dass**
der Mechanismus (9, 10; 9', 10') mit einer Greifvorrichtung (2) zum Halten der sich bewegenden Flaschen verbunden ist.

## Revendications

1. Dispositif à retourner des bouteilles en mouvement, dans lequel le retournement des bouteilles depuis une position verticale tournée vers le haut (B) vers une position verticale tournée vers le bas (B') est obtenu pendant une rotation continue d'un carrousel (1) sur lequel un bras oscillant (6) est articulé par un pivot (7), le carrousel (1) pouvant pivoter autour d'un axe de rotation (8) dans un plan horizontal,
**caractérisé en ce que**
le bras (6) est relié à un mécanisme (9, 10 ; 9', 10') lequel accroît une excursion angulaire verticale du bras (6), le mécanisme (9, 10 ; 9', 10') comprenant une roue à lobes (9) et une crémaillère (10) entrant en prise avec celle-ci, dans lequel la roue à lobes (9) est une roue à trois lobes (9) et la crémaillère (10) est un secteur entrant en prise avec celle-ci.

2. Dispositif selon la revendication 1,
**caractérisé en ce que**
la roue à cames (9) et la crémaillère (10) sont fabriquées avec des secteurs de roues hélicoïdales ou globoïdes avec des vis sans fin.

3. Dispositif selon la revendication 1,
**caractérisé en ce que**
la roue à lobes (9) et la crémaillère (10) sont fabriquées avec des secteurs coniques entrant en prise avec des pignons conjugués.

4. Dispositif selon l'une quelconque des revendications précédentes,
**caractérisé en ce que**
le mécanisme (9, 10 ; 9', 10') est relié à une extrémité radiale extérieure du bras (6).

5. Dispositif selon la revendication 4,
**caractérisé en ce que**
la glissière (5) est réalisée spécifiquement sous une forme telle qu'une partie inférieure de la glissière (5) fait face à une zone d'entrée de bouteille et une partie supérieure de celle-ci fait face à une zone de sortie de bouteille.

6. Dispositif selon l'une quelconque des revendications précédentes,
**caractérisé en ce que**
le bras (6) est relié à un ressort (11), lequel est également relié au carrousel (1).

7. Dispositif selon la revendication 4,
**caractérisé en ce que**
le ressort (11) est relié à une extrémité intérieure radiale du bras (16).

8. Dispositif selon l'une quelconque des revendications précédentes,
**caractérisé en ce que**
le mécanisme (9, 10 ; 9', 10') est relié à un équipement de prise (2) pour maintenir les bouteilles en mouvement.
